# EUROPEAN PATENT SPECIFICATION

(11) **EP 1 970 567 B1**
(45) Date of publication and mention of the grant of the patent: **05.12.2012**
(21) Application number: 06843000.8
(22) Date of filing: 21.12.2006
(51) Int. Cl.: F04B 27/14, F04B 49/00

(54) **VARIABLE DISPLACEMENT COMPRESSOR**
VERDICHTER MIT VARIABLER KAPAZITÄT
COMPRESSEUR À CYLINDRÉE VARIABLE

(30) Priority: 06.01.2006 JP 2006001189
(43) Date of publication of application: 17.09.2008
(73) Proprietor: Sanden Corporation, Isesaki-shi, Gunma 372-8502 (JP)
(72) Inventor: TERAUCHI, Kiyoshi, Isesaki-shi, Gunma 372-8502 (JP)
(74) Representative: Prüfer & Partner GbR European Patent Attorneys
(86) International application number: PCT/JP2006/325492
(87) International publication number: WO 2007/077750

(56) References cited:
- JP-A- 04 350 372
- JP-A- 07 119 642
- JP-A- 11 037 325
- JP-A- 2005 146 860

## Description

### Technical Field of the Invention

The present invention relates to a variable displacement compressor used in a refrigeration circuit for air conditioning for vehicles, etc., and specifically, to a variable displacement compressor having a control means therein for controlling the displacement.

### Background Art of the Invention

Recently, in the use for air conditioning for vehicles, etc., in order to decrease influence to global warmth, a refrigeration cycle using a natural-system refrigerant such as carbon dioxide has been developed. However, with respect to carbon dioxide, in the use employed in a relatively high-temperature region such as an air conditioning system for vehicles, because the operational temperature in the refrigeration cycle exceeds the critical point of the refrigerant, it operates in a supercritical region in which the high-temperature-side refrigerant gas cannot be condensed. Since the temperature and the pressure of the gas in the supercritical region do not correspond to each other by a relationship of one to one, if there is a great fluctuation in the rotational speed or a great fluctuation in the load of the compressor driven by an engine in a vehicle and the like, the increase of the high-pressure side pressure is great, and an inconvenience, that the pressure exceeds an acceptable high pressure limit, is liable to occur. Therefore, a stable operation at a high pressure, such as an operation in a system where the temperature and the pressure of the refrigerant meet with each other by a relationship of one to one because of being condensed even at a high pressure as in a case using R 134a and the like as the refrigerant, cannot be expected.

In order to solve this problem, Patent document 1 discloses the means wherein, in a variable displacement compressor controlling the displacement by a crank chamber pressure, a relief valve provided between a discharge chamber and a crank chamber is opened at the time of an abnormal high pressure, the crank chamber pressure is increased by flowing gas thereinto from the high-pressure side, and the displacement is decreased by decreasing the piston stroke of the compressor.

Further, Patent document 2 discloses the means wherein a suction pressure control means for controlling the displacement for discharge of the variable displacement compressor so that a predetermined suction pressure is achieved by a suction pressure detecting means and a discharge pressure control means for controlling the displacement for discharge so that a predetermined discharge pressure is achieved by a pressure detecting means for a discharge-pressure region are provided, and an abnormal increase of discharge pressure is suppressed by switching the control between the suction pressure control means and the discharge pressure control means depending on the detected pressure sent from the discharge pressure detecting means.

However, in the method for using a relief valve as described in Patent document 1, because the displacement of the compressor rapidly decreases when the discharge pressure exceeds a predetermined threshold value, the cooling operation of the refrigeration cycle is interrupted, and such a condition is not preferable from the viewpoints of comfortableness and cooling performance as a cooling device. Further, there is also a problem that the system and the device become complicated because a relief valve becomes necessary other than a control valve.

On the other hand, in the variable displacement compressor described in Patent document 2, because the suction pressure control and the discharge pressure control are employed by being switched, the control is improved from the viewpoints of comfortableness and cooling performance as a cooling device. However, there is a problem that the calculation routine of the control for switching the operations of the control valves, the detecting means and the control system become complicated. Further, an electronic control valve capable of externally controlling electronically is required as the control valve, and the structure and the cost as the whole of the system become complicated and expensive.
Patent document 1: JP-A-2002-61571
Patent document 2: JP-A-2005-127278

JP-A-04350372, which represents the closest prior art, provides a capacity control valve capable of holding the set inlet pressure stably without being influenced by the discharged pressure fluctuation of a compressor. Therein, a discharge pressure chamber partitioned by a bellows and a ball bearing is communicated with a discharge camber and also with a crank chamber through a valve hole and a control port. An inlet pressure chamber partitioned by a diaphragm is communicated with an inlet chamber. A ball valve disposed in the discharge pressure chamber is supported in such a way as to switch the valve hole by a valve spring through the ball bearing and a supporting rod, and by an adjusting spring through a rod, a diaphragm, a spring bearing, and the like. The discharge pressure receiving area of the bellows is set to be equal to that of the ball valve.

JP-A-11037325 describes a control valve for a variable displacement compressor, which keeps the blowout temperature of the cooling air almost constant, by correcting a pressure loss between a refrigerant gas outlet of an evaporator and an inlet port of a compressor in a normal operation, and which performs the quick cooling when a temperature of a room to be cooled is remarkably high. In the case when a temperature of a cabin in within a range of a normal temperature, a discharge capacity of the compressor is controlled while finally changing an opening of a valve hole by a valve element through the bellows which is expanded and contracted by the inlet pressure introduced into an inlet pressure introduction space. Further in the case when the temperature of the cabin is remarkably high, the shrinkage force of the bellows acts as the valve opening force on the valve element, a pressure sensitive moving rod is displaced in the direction to compress a coil spring by the increase of the discharge pressure, and this displacement force is added as the valve opening force to the valve element. Whereby the control pressure can be kept in a high condition, the compressor keeps the operating condition with a large discharge capacity, and the cooling air blowout temperature from an evaporator is kept low, to perform the quick cooling.

### Disclosure of the Invention

### Problems to be solved by the Invention

Accordingly, an object of the present invention is to solve the problems present in the high-pressure control means in the above-described conventional compressors, and is to provide a variable displacement compressor in which the control system is simple, and the control valve is inexpensive and simple and capable of stabilized operation, and which has an internal control means suitable for a refrigeration cycle operating in a supercritical region.

### Means for solving the Problems

This object is achieved by a compressor according to claim 1. Advantageous developments are subject to the subclaims.

A variable displacement compressor according to the present invention comprises:
a control valve having:
   a pressure sensitive member for detecting a suction pressure (pₛ) of a fluid and controlling said suction pressure (pₛ) to a target control value;
   a valve portion, a first spring, a piston-like discharge pressure sensitive member, a second spring, and a chamber containing said valve portion and said first spring;
   said valve portion being connected to said piston-like discharge pressure sensitive member via said first spring for opening and closing the communication between a discharge chamber and a crank chamber of said variable displacement compressor, a hole of said control valve communicating with said chamber and with said discharge chamber side through a communication path, the piston-like discharge pressure sensitive member changing a force urging said valve portion through said spring by movement caused by receiving a discharge pressure (p_{d}) for detecting the discharge pressure (p_{d}),
   said pressure sensitive member operating to open said valve portion if the detected suction pressure (pₛ) is lower than a predetermined value and to close said valve portion if the detected suction pressure (pₛ) is higher than said predetermined value,
   wherein in a region where the discharge pressure (p_{d}) is smaller than a predetermined threshold (p_{d1}), the suction pressure (pₛ) is controlled as to be constant or as to be slightly decreased relative to increase of the discharge pressure, and in a region where the discharge pressure (p_{d}) exceeds said predetermined threshold (p_{d1}), the suction pressure increases as the discharge pressure (p_{d}) increases, said predetermined threshold (p_{d1}) corresponding to Δp_{dc}=X·k/S_{d} wherein Δp_{dc} is the pressure difference between the discharge pressure (p_{d}) and a crank chamber pressure (p_{c}), X·k is the product of the compressed amount X and the spring factor of said second spring and S_{d} is the pressure receiving area of said piston-like discharge pressure sensitive member.

In the variable displacement compressor, as the fluid being compressed, a fluid capable of operating in a supercritical region, particularly, carbon dioxide can be used.

Further, the variable displacement compressor can employ a structure wherein the first control means or/and the second control means has a valve portion, and the opening/closing operation of the valve portion is controlled by the suction pressure or/and the high-pressure side pressure.

Further, the compressor also can employ a structure wherein each of the above-described first control means and second control means is formed as a single control valve capable of being incorporated into the compressor, for achieving facilitation of manufacturing and assembling, decrease of the number of parts and cost down.

### Effect according_to the Invention

In the variable displacement compressor according to the present invention, by the internal control technology due to the first control means and second control means, a displacement control high in comfortableness, cooling performance and stability can be performed by a simple and inexpensive structure even for a supercritical refrigeration cycle, and can be provided a displacement control technology of a variable displacement compressor suitable for a supercritical cycle.

### Brief explanation of the drawings

[Fig. 1] Fig. I is a schematic vertical sectional view of a variable displacement compressor according to an embodiment of the present invention.
[Fig. 2] Fig. 2 is an enlarged sectional view of a control valve in the variable displacement compressor depicted in Fig. 1.
[Fig. 3] Fig. 3 is a diagram indicating a relationship between a discharge pressure and a suction pressure for showing a control property in the present invention.
[Fig. 4] Fig. 4 is a sectional view showing another example of a control valve in the variable displacement compressor according to the present invention.

### Explanation of symbols

- 1:: cylinder block
- 2:: cylinder
- 3:: piston
- 4:: connecting rod
- 5:: swash plate
- 6:: thrust bearing
- 7:: inclined plate cam
- 8:: link mechanism
- 9:: rotor
- 10:: drive shaft
- 11:: crank chamber
- 12:: gas passageway
- 13:: control valve
- 14:: hole
- 15:: pressure sensitive member
- 16:: discharge chamber
- 17:: valve portion
- 18:: spring
- 19:: piston-like pressure sensitive member
- 20:: spring
- 21:: hole
- 22:: communication path
- 23:: suction chamber
- 24:: chamber
- 25:: hole
- 26:: communication path
- 27:: communication path
- 28:: rod portion
- 100:: variable displacement compressor

### The Best mode for carrying out the Invention

Hereinafter, desirable embodiments of the present invention will be explained referring to figures.

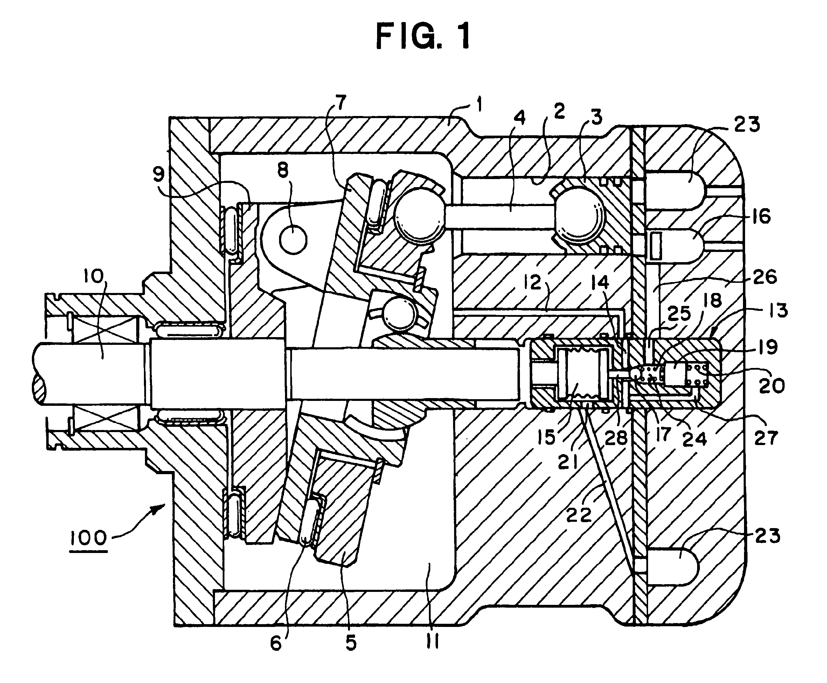

Fig. 1 shows a variable displacement compressor 100 according to an embodiment of the present invention. In Fig. 1, a plurality of pistons 3 are inserted into a plurality of cylinders 2 formed in a cylinder block 1, respectively, and each piston 3 is connected to a swash plate 5 via a connecting rod 4. Swash plate 5 is connected to an inclined plate cam 7 via a thrust bearing 6 so that a force is transmitted between swash plate 5 and inclined plate cam 7. Inclined plate cam 7 is linked to a rotor 9 via a link mechanism 8 at a condition capable of varying the inclined angle so that a rotational force is transmitted therebetween. Rotor 9 is fixed to a drive shaft 10.

In a crank chamber 11, the gas force balance is changed by adjusting the crank chamber pressure, thereby changing the inclined angle of inclined plate cam 7. In order to obtain the source of this crank chamber pressure, crank chamber 1 communicates with an entrance hole 14 of a control valve 13 through a gas passageway 12.

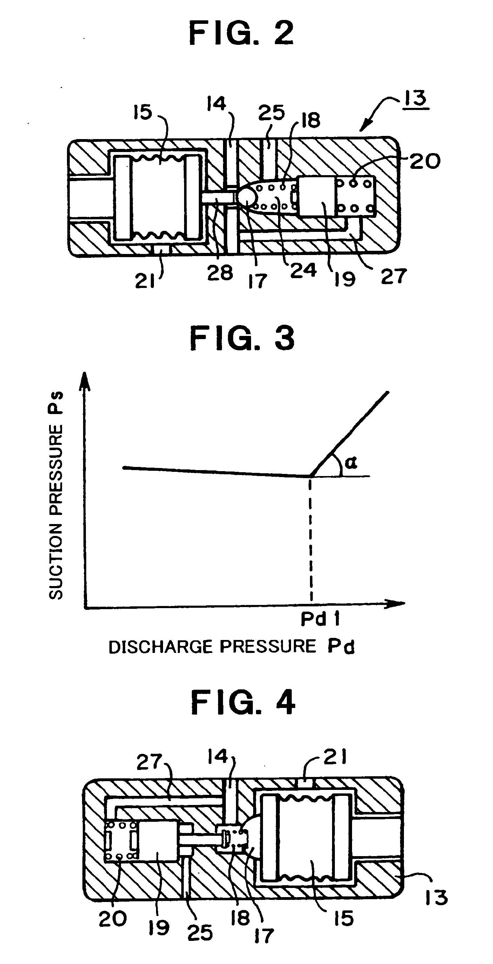

As shown also in Fig. 2, control valve 13 comprises a first control means and a second control means according to the present invention, and in this embodiment, it is structured as a control valve formed as a single member incorporated into variable displacement compressor 100. This control valve 13 has a pressure sensitive member 15 for detecting a suction pressure, a valve portion 17 for opening/closing the communication between a discharge chamber 16 and crank chamber 11, a spring 18, a piston-like discharge pressure sensitive member 19 and a spring 20. A hole 21 of control valve 13 is communicated with the side of a suction chamber 23 through a communication path 22. A hole 25 is communicated with a chamber 24 containing valve portion 17 and spring 18, and hole 25 communicates with discharge chamber 16 side through a communication path 26.

Pressure sensitive member 15 is structured from a bellows or a diaphragm, and in the example depicted in the figure, a bellows is used. Pressure sensitive member 15 detects a suction pressure, and operates so as to open valve portion 17 if the detected pressure is lower than a predetermined value and so as to close valve portion 17 if the detected pressure is higher than that. By adjusting the gas introduction amount of discharge side gas into crank chamber 11 by this operation, the pressure in crank chamber 11 is adjusted, and the inclination angle of inclined plate cam 7 is adjusted. By this, the displacement of the compressor is controlled by feedback so that the suction pressure becomes a target control value.

Valve portion 17 is connected.to discharge pressure sensitive member 19 via spring 18, and discharge pressure sensitive member 19 changes a force urging valve portion 17 through spring 18 by movement caused by receiving the discharge pressure. One side of discharge pressure sensitive member 19 communicates with the low-pressure side of crank chamber 11 or suction chamber 23 whose pressure is introduced through a communication path 27, and a force, which is obtained by the product of a pressure difference between the discharge pressure and the crank chamber pressure (or the suction pressure) and the pressure-receiving area of discharge pressure sensitive member 19, consequently operates in a direction for opening valve portion 17. Because this force increases and the force for opening valve portion 17 increases when the discharge pressure is high, the pressure in crank chamber 11 is increased, the inclination angle of inclined plate cam 7 is decreased to decrease the stroke of piston 3, and increase of the discharge pressure is suppressed.

Since this force due to the discharge pressure substantially does not work unless this force exceeds a force Xk determined as the product of a compressed amount X and a spring factor "k" of spring 20, after all, from the relationship between pressure difference ΔPdc between discharge pressure Pd and crank chamber pressure Pc and an effective area Sd of discharge pressure sensitive member 19, ΔPdc · Sd=Xk stands, and a force starting to move begins to work at Pd1 corresponding to ΔPdc satisfying Pdc=Xk/Sd. This relationship is shown in Fig. 3.

In Fig. 3, in a region where discharge pressure Pd is smaller than a predetermined threshold Pd1, suction pressure Ps is controlled so as to be constant or so as to be slightly decreased relative to increase of the discharge pressure, and in a region where discharge pressure Pd exceeds Pd1, suction pressure Ps increases as discharge pressure Pd increases. By this, in a high-discharge pressure region exceeding Pd1, the capacity of the compressor is gradually decreased and a rapid increase of discharge pressure can be prevented.

The gradient α indicating the increase of suction pressure in Fig. 3 can be obtained as a target property by appropriately designing the pressure receiving area of discharge pressure sensitive member 19. Further, also as to threshold Pd1, similarly, it can be arbitrarily designed by setting of the force of spring 20.

The crank chamber pressure flows out from crank chamber 11 to suction chamber 23 by the leak through the gap at rod portion 28 of pressure sensitive member 15 of control valve 13.

Where, although the compression mechanism has been explained as a variable displacement mechanism using the swash plate in Fig. 1, it may be structured as a single inclined plate type compression mechanism.

(1) Further, in the explanation of the operation in the above-described embodiment, although the means for adjusting the amount of gas introduced from the discharge chamber to the crank case is exemplified as the means for adjusting the crank chamber pressure for adjusting the displacement, a similar operation is possible even by means for adjusting the amount of gas flowing out from the crank chamber to the suction chamber.
(2) Further, although the above description has been explained with respect to the example in which the suction pressure is detected by pressure sensitive member 15, it may be means for detecting the pressure in crank chamber 11. A structural example of control valve 13 in this case is depicted in Fig. 4. In Fig. 4, the same symbols as those in Fig. 2 are given to portions having the same functions as those in the control valve depicted in Fig. 2. In Fig. 4, hole 21 a case where communicates with suction chamber 23 and hole 14 communicates with crank chamber 11 corresponds to the example of the above-described case (1), and an opposite case corresponds to the example of the above-described case (2).

As described above, since the crank chamber pressure is adjusted for adjusting the displacement in sensitive response simultaneously to the discharge pressure and the suction pressure, even in a refrigeration cycle using refrigerant such as carbon dioxide which is difficult to be stabilized at the high-pressure side, a proper control for the suction pressure and the discharge pressure can be carried out simply.

### Industrial Applications of the Invention

The variable displacement compressor according to the present invention is suitable for use in a refrigeration cycle operating in a supercritical region, and particularly, suitable for a refrigeration cycle using carbon dioxide as refrigerant.

## Claims

1. A variable displacement compressor (100) comprising:
a control valve (13) having:
a pressure sensitive member (15) for detecting a suction pressure (pₛ) of a fluid and controlling said suction pressure (pₛ) to a target control value;
a valve portion (17), a first spring (18), a piston-like discharge pressure sensitive member (19), a second spring (20), and a chamber (24) containing said valve portion (17) and said first spring (18);
said valve portion (17) being connected to said piston-like discharge pressure sensitive member (19) via said first spring (18) for opening and closing the communication between a discharge chamber (16) and a crank chamber (11) of said variable displacement compressor (100), a hole (25) of said control valve (13) communicating with said chamber (24) and with said discharge chamber (16) side through a communication path (26), the piston-like discharge pressure sensitive member (19) changing a force urging said valve portion (17) through said spring (18) by movement caused by receiving a discharge pressure (p_{d}) for detecting the discharge pressure (p_{d}),
said pressure sensitive member (15) operating to open said valve portion (17) if the detected suction pressure (pₛ) is lower than a predetermined value and to close said valve portion (17) if the detected suction pressure (pₛ) is higher than said predetermined value,
wherein in a region where the discharge pressure (p_{d}) is smaller than a predetermined threshold (p_{d1}), the suction pressure (pₛ) is controlled as to be constant or as to be slightly decreased relative to increase of the discharge pressure, and in a region where the discharge pressure (p_{d}) exceeds said predetermined threshold (p_{d1}), the suction pressure increases as the discharge pressure (p_{d}) increases, said predetermined threshold (p_{d1}) corresponding to Δp_{dc}=X·k/S_{d} wherein Δp_{dc} is the pressure difference between the discharge pressure (p_{d}) and a crank chamber pressure (p_{c}), X·k is the product of the compressed amount X and the spring factor of said second spring (20) and S_{d} is the pressure receiving area of said piston-like discharge pressure sensitive member (19) .

2. The variable displacement compressor according to claim 1,
wherein said fluid is a fluid capable of operating in a supercritical region.

3. The variable displacement compressor according to claim 2, wherein said fluid capable of operating in the supercritical region is carbon dioxide.

## Patentansprüche

1. Ein Kompressor mit variabler Verdrängung (100) weist auf:
ein Steuerventil (13) mit:
einem druckempfindlichen Teil (15) zum Erfassen eines Saugdrucks (pₛ) eines Fluids und zum Steuern des Saugdrucks (pₛ) zu einem Sollsteuerwert;
einem Ventilteil (17), einer ersten Feder (18), einem kolbenartigen verdichtungsdruckempfindlichen Teil (19), einer zweiten Feder (20), und einer Kammer (24) die den Ventilteil (17) und die erste Feder (18) enthält; wobei
der Ventilteil (17) über die erste Feder (18) mit dem kolbenartigen verdichtungsdruckempfindlichen Teil (19) verbunden ist zum Öffnen und Schließen der Verbindung zwischen einer Verdichtungskammer (16) und einer Kurbelkammer (11) des Kompressors mit variabler Verdrängung (100), wobei ein Loch (25) des Steuerventils (13) mit der Kammer (24) und mit der Verdichtungskammer (16) - Seite über einen Verbindungsweg (26) in Verbindung steht, wobei das kolbenartige verdichtungsdruckempfindliche Teil (19) eine Kraft ändert, die das Ventilteil (17) durch die Feder (18) zwingt durch eine Bewegung, die durch das Aufnehmen eines Verdichtungsdrucks (p_{d}) verursacht wird zum Erfassen des Verdichtungsdrucks (p_{d}),
wobei das druckempfindliche Teil (15 arbeitet, um den Ventilteil (17) zu öffnen, wenn der erfasste Saugdruck (pₛ) niedriger ist als ein vorbestimmter Wert und den Ventilteil (17) zu schließen, wenn der erfasste Saugdruck (pₛ) größer ist als der vorbestimmte Wert,
wobei in einem Bereich, wo der Verdichtungsdruck (p_{d}) kleiner ist als ein vorbestimmter Grenzwert (p_{d1}), der Saugdruck (pₛ) gesteuert wird, konstant zu sein oder bezüglich des Anstiegs des Verdichtungsdrucks leicht verringert zu sein, und in einem Bereich, wo der Verdichtungsdruck (p_{d}) den vorbestimmten Grenzwert (p_{d1}) übersteigt, der Saugdruck ansteigt wie der Verdichtungsdruck (p_{d}) ansteigt, wobei der vorbestimmte Grenzwert (p_{d1}) Δp_{dc}= X·k/S_{d} entspricht, wobei Δp_{dc} die Druckdifferenz zwischen dem Verdichtungsdruck (p_{d}) und einem Kurbelkammerdruck (p_{c}) ist, X·k das Produkt der komprimierten Menge X und des Federfaktors der zweiten Feder (20) ist und S_{d} der Druckaufnahmebereich des kolbenartigen verdichtungsdruckempfindlichen Teils (19) ist.

2. Der Kompressor mit variabler Verdrängung gemäß Anspruch 1, wobei das Fluid ein Fluid ist, das in der Lage ist, in einem überkritischen Bereich zu arbeiten.

3. Der Kompressor mit variabler Verdrängung gemäß Anspruch 2, wobei das Fluid, das in der Lage ist, in dem überkritischen Bereich zu arbeiten, Kohlendioxid ist.

## Revendications

1. Compresseur (100) à déplacement variable comprenant :
une soupape de commande (13) comportant :
- un élément sensible à la pression (15) pour détecter la pression d'aspiration (pₛ) d'un fluide et pour commander cette pression d'aspiration (pₛ) selon une valeur de commande cible,
- une partie de soupape (17), un premier ressort (18), un élément sensible à la pression de refoulement de type piston (19), un second ressort (20) et une chambre (24) renfermant la partie de valve (17) et le premier ressort (18),
la partie de soupape (17) étant reliée à l'élément sensible à la pression de refoulement de type piston (19) par l'intermédiaire du premier ressort (18) pour ouvrir et fermer la communication entre une chambre de refoulement (16) et une chambre de vilebrequin (11) du compresseur à déplacement variable (100), un perçage (25) de la soupape de commande (13) communiquant avec la chambre (24) et avec un côté de la chambre de refoulement (16) par un chemin de communications (26), l'organe sensible à la pression de refoulement de type piston (19) modifiant la force poussant la partie de soupape (17) au moyen du ressort (18) par un mouvement provoqué par la réception d'une pression de refoulement (p_{d}) pour détecter cette pression de refoulement (p_{d}), l'élément sensible à la pression (15) agissant pour ouvrir la partie de soupape (17) si la pression d'aspiration (pₛ) détectée est inférieure à une valeur prédéfinie, et pour fermer cette partie de soupape (17) si la pression d'aspiration (pₛ) détectée est supérieure à cette valeur prédéfinie,
dans une zone où la pression de refoulement (p_{d}) est inférieure à un seuil prédéfini (p_{dt}), la pression d'aspiration (pₛ) étant commandée de façon à être constante ou à être un peu diminuée par rapport à une augmentation de la pression de refoulement, et dans une zone où la pression de refoulement (p_{d}) est supérieure à ce seuil (p_{dt}) prédéfini, la pression d'aspiration augmentant lorsque la pression de charge (p_{d}) augmente, le seuil (p_{dt}) prédéfini correspondant à Δp_{dc} = X k/Sd, formule dans laquelle Δp_{dc} correspond à la différence de pression entre la pression de refoulement (p_{d}) et la pression dans la chambre de vilebrequin (p_{c}), X k est le produit du taux de compression X et du facteur d'élasticité du second ressort (20) et S_{d} est la surface sur laquelle s'applique la pression de l'élément sensible à la pression de refoulement de type piston (19).

2. Compresseur à déplacement variable conforme à la revendication 1, dans lequel le fluide est un fluide susceptible de fonctionner dans une zone super critique.

3. Compresseur à déplacement variable conforme à la revendication 2, dans lequel le fluide susceptible de fonctionner dans la zone super critique est du dioxyde de carbone.
